**Europäisches Patentamt**

**European Patent Office**

**Office européen des brevets**

(11) Veröffentlichungsnummer: **0 645 649 A2**

## (12) EUROPÄISCHE PATENTANMELDUNG

(21) Anmeldenummer: **94113717.6**

(22) Anmeldetag: **01.09.94**

(51) Int. Cl.6: **G02B 6/12**

Die Anmeldung wird, wie ursprünglich eingereicht, unvollständig veröffentlicht (Art. 93 (2) EPÜ),Anspruch 9 fehlt.

(30) Priorität: **23.09.93 DE 4332450**

(43) Veröffentlichungstag der Anmeldung:
**29.03.95 Patentblatt 95/13**

(84) Benannte Vertragsstaaten:
**DE FR GB SE**

(71) Anmelder: **SIEMENS AKTIENGESELLSCHAFT**
**Wittelsbacherplatz 2**
**D-80333 München (DE)**

(72) Erfinder: **Sauer, Bernd, Dr.**
**Faberstr. 16**
**D-90592 Lindenberg/Schwarzenbruck (DE)**
Erfinder: **Müller, Gustav, Dr.**
**Feldmochinger Str. 41d**
**D-80993 München (DE)**
Erfinder: **Stoll, Lothar, Dr.**
**Flössergasse 11a**
**D-81369 München (DE)**

(54) **Gekrümmter streifenförmiger integriert optischer Wellenleiter.**

(57) 2.1 Es wird ein streifenförmiger integriert optischer Wellenleiter (1) mit zwischen den Enden (11, 12) des Wellenleiters gekrümmt verlaufender Längsachse (10) zur Herstellung optischer Verbindungen zwischen beliebigen Komponenten eines optischen Schaltkreises beschrieben, bei dem Konversionsverluste, welche durch die Veränderung der lokalen transversalen Modenverteilung auftreten, gering gehalten werden können.

3.2 Dazu weist die Längsachse an beiden Enden des Wellenleiters die Krümmung null und zwischen den beiden Enden des Wellenleiters zumindest zwei Abschnitte ($10_1$, $10_2$) auf, in welchen jeweils die Krümmung der Längsachse von einem Ende des Abschnitts in Richtung zu einem anderen Ende dieses Abschnitts stetig monoton von der Krümmung null am einen Ende auf eine betragsmäßig maximale Krümmung ($|K_{max}|$) am anderen Ende des Abschnitts zunimmt.

2.3 Anwendung bei optischen Nachrichtensystemen

FIG 2

EP 0 645 649 A2

Die Erfindung betrifft einen gekrümmten streifenförmigen integriert optischen Wellenleiter nach dem Oberbegriff des Patentanspruchs 1.

Ein wichtiges Bauelement der integrierten Optik ist ein streifenförmiger Wellenleiter, welcher die Lichtleitung zwischen zwei beliebig zueinander angeordneten Komponenten eines optisches Schaltkreises gewährleistet. Dieser Wellenleiter wird üblicherweise aus geraden und/oder gleichförmig gekrümmten Wellenleiterstücken zusammengesetzt, da innerhalb dieser Teilstücke geführte Moden ausbreitungsfähig sind. Die einzelnen Wellenleiterstücke können je nach der vorgegebenen Richtung der Wellenleiterverbindung in unterschiedlicher Art miteinander verbunden werden.

Die einfachsten Verbindungstechniken sind dabei die stumpfe, geknickte und versetzungsfreie Kopplung der Enden der einzelnen Wellenleiterstücke (siehe Ebeling K. J.: Integrierte Optoelektronik (Springer, Berlin, 1989). An den Koppelstellen treten Strahlungsverluste aufgrund der unterschiedlichen transversalen Feldverteilungen und Phasenfronten an den Stirnflächen der Teilstücke auf.

In der DE 31 07 112 C2 und in Pennings E.C.M. "Bends in optical ridge waveguides; modeling and experiments" Promotionsschrift, Delft Univ. of Technology, Holland, 1990, ist gezeigt, daß die Koppelverluste zwischen einem geraden und einem gleichförmig gekrümmten bzw. zwei gleichförmig gekrümmten Wellenleiterstücken durch einen lateralen Versatz der Längsachsen der Wellenleiter verringert werden können. Die Koppelverluste an einer solchen Koppelstelle sind jedoch im allgemeinen polarisationsabhängig und sehr empfindlich auf technologische Herstellungstoleranzen.

Aufgabe der Erfindung ist es, einen streifenförmigen integriert optischen Wellenleiter zur Herstellung einer Lichtleitung zwischen zwei beliebig relativ zueinander angeordneten Komponenten eines optischen Schaltkreises bereitzustellen, bei welchem Konversionsverluste, die durch eine Veränderung einer lokalen transversalen Modenverteilung auftreten, gering gehalten werden können.

Diese Aufgabe wird durch die im kennzeichnenden Teil des Patentanspruchs 1 angegebenen Merkmale gelost.

Bevorzugte und vorteilhafte Ausgestaltungen des erfindungsgemäßen Wellenleiters gehen aus den Unteransprüchen hervor.

Der erfindungsgemäße Wellenleiter weist folgende Vorteile auf:

a) Die Ankopplung des Wellenleiters kann ohne Versatz und daher mit hoher Fertigungstoleranz erfolgen, da die Krümmung an den Enden des Wellenleiters zu null gewählt ist.

b) Die Ankopplung eines Endes des Wellenleiters an ein gerades Bauelement entspricht einer Koppelstelle zwischen zwei geraden Wellenleitern. Die Koppelverluste an einer solchen Koppelstelle können bei geringem Dimensionierungsaufwand eingehalten werden.

c) Der gekrümmte Wellenleiter kann eine starke laterale Wellenführung aufweisen, so daß die Wellenausbreitung polarisationsunabhängig erfolgt.

d) Die Strahlungsverluste, welche typisch für gekrümmte Wellenleiter sind, können durch eine starke laterale Fuhrung vollständig unterdrückt werden.

e) Durch eine spezielle Wahl der Krümmungsfunktion entlang des Wellenleiters können die Konversionsverluste, welche durch die Veränderung der lokalen transversalen Modenverteilung auftreten, minimiert werden.

f) Der gekrümmte Verlauf des Wellenleiters kann durch Einfügen von geraden bzw. gleichförmig gekrümmten Wellenleiterstücken ohne zusätzliche Konversionsverluste erweitert oder variiert werden.

Die Erfindung wird in der nachfolgenden Beschreibung anhand der Figuren beispielhaft naher erläutert.

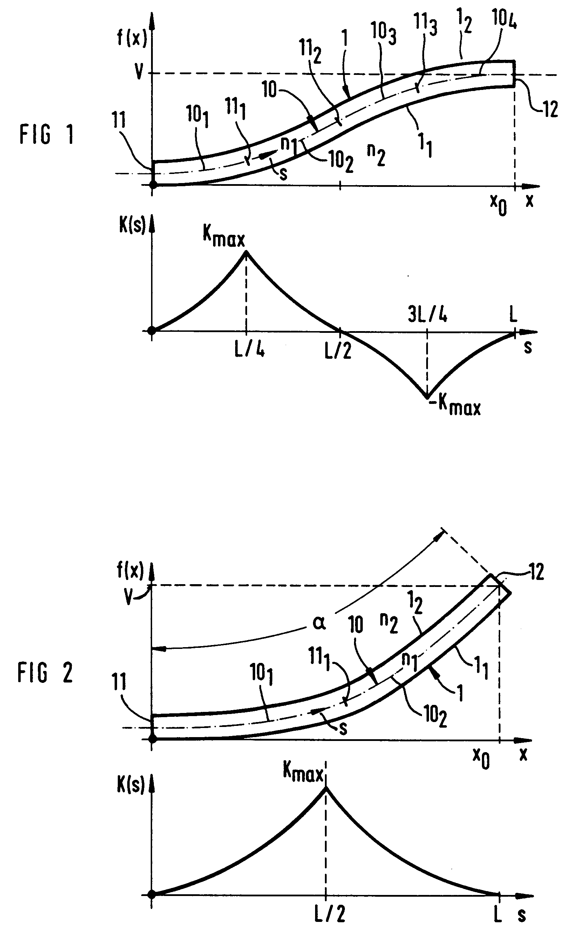

Die Figuren 1 bis 3 zeigen in Draufsicht drei verschiedene Ausführungsbeispiele eines erfindungsgemäßen Wellenleiters zusammen mit einem jeweils zugeordneten Diagramm, das die Krümmung $K(s)$ als Funktion der Bogenlänge $s$ der parallel zur Zeichenebene verlaufenden gekrümmten Längsachse des jeweiligen Wellenleiters zeigt.

In den Figuren sind der gekrümmte streifenförmige Wellenleiter mit 1, die beiden Enden des Wellenleiters 1 mit 11 und 12, die Langsachse des Wellenleiters 1 mit 10 und Abschnitte der Längsachse 10 mit $10_1$, $10_2$, $10_3$ und $10_4$ bezeichnet.

Die Enden des Abschnitts $10_1$ sind mit 11 und $11_1$, die Enden des Abschnitts $10_2$ sind $11_1$ und $11_2$, die Enden des Abschnitts $10_3$ sind mit $11_2$ und $11_3$ und die Enden des Abschnitts $10_4$ sind mit $11_3$ und 12. bezeichnet.

Jeder Wellenleiter 1 ist seitlich durch optisch brechende Begrenzungsflächen $1_1$ und $1_2$ begrenzt, die einen Brechzahlsprung zwischen einer Brechzahl $n_1$ des Wellenleiters 1 und einer relativ zu dieser Brechzahl $n_1$ niedrigeren Brechzahl $n_2$ eines den Wellenleiters 1 umgebenden Mediums definiert. Überdies weist jeder Wellenleiter 1 entlang der Längsachse 10 konstanten Querschnitt auf, indem dieser Wellenleiter 1, beispielsweise eine senkrecht zur Zeichenebene gemessene konstante Dicke und eine parallel zur Zeichenebene und senkrecht zur Längsachse 10 gemessene Breite aufweist, wobei die seitlichen Begrenzungsflächen $1_1$ und $1_2$ beispielsweise im wesentlichen parallel zur Längsachse und im wesentlichen senkrecht zur Zeichenebene sind.

Die Längsachse 10 des Wellenleiters 1 nach Figur 1 weist eine S-förmige Biegung auf, wie sie zum Ankoppeln von zwei lateral versetzten optischen Bauelementen benutzt werden kann und ist beispielsweise in vier unmittelbar aufeinanderfolgende aneinandergrenzende Abschnitte $10_1$ bis $10_4$ unterteilt. In einem ersten Abschnitt $10_1$ mit einem mit dem einen Ende 11 des Wellenleiters 1 zusammenfallenden Ende und einem anderen Ende $11_1$ nimmt die Krümmung vom einen Ende 11 des Wellenleiters 1 in Richtung zum anderen Ende $11_1$ dieses Abschnitts $10_1$ von der Krümmung null stetig monoton auf eine beispielsweise positive maximale Krümmung $K_{max}$ zu. Man könnte auch umgekehrt sagen, daß die Krümmung von der maximalen Krümmung $K_{max}$ am Ende $11_1$ stetig monoton auf die Krümmung null am anderen Ende 11 dieses Abschnitts $10_1$ abfällt. Beide Aussagen sind für diesen und alle anderen Abschnitte gleichwertig.

In dem rechts an den Abschnitt $10_1$ angrenzenden Abschnitt $10_2$ mit einem Ende, das mit dem anderen Ende $11_1$ des Abschnitts $10_1$ zusammenfällt und einem anderen Ende $11_2$ steigt die Krümmung von der Krümmung null am anderen Ende $11_2$ dieses Abschnitts $10_2$ in Richtung zum einen Ende $11_1$ stetig monoton auf die positive maximale Krümmung $K_{max}$ an diesem einen Ende $11_1$ an bzw. fällt von dieser positiven Krümmung $K_{max}$ an diesem einen Ende in Richtung zum anderen Ende $11_2$ dieses Abschnitts $10_2$ stetig monoton auf die Krümmung null an diesem anderen Ende $11_2$ ab.

Ähnlich fällt in dem rechts an den Abschnitt $10_2$ angrenzenden Abschnitt $10_3$ mit einem mit dem anderen Ende $11_2$ des Abschnitts $10_1$ zusammenfallenden Ende und einem anderen Ende $11_3$ die Krümmung von der Krümmung null am einen Ende $11_2$ dieses Abschnitts $10_3$ in Richtung zum anderen Ende $11_3$ dieses Abschnitts $10_3$ auf die negative minimale Krümmung $-K_{max}$ an diesem anderen Ende $11_3$ ab bzw. steigt auf die betragsmäßige maximale Krümmung $|K_{max}|$ an diesem Ende $11_3$ an.

Schließlich steigt in dem rechts an den Abschnitt $10_3$ angrenzenden Abschnitt $10_4$ mit einem mit dem anderen Ende $11_3$ des Abschnitts $10_3$ zusammenfallenden Ende und einem mit dem anderen Ende 12 des Wellenleiters 1 zusammenfallenden anderen Ende von der negativen maximalen Krümmung $-K_{max}$ am einen Ende $11_3$ in Richtung zum anderen Ende 12 dieses Abschnitts $10_3$ stetig monoton auf die Krümmung null an diesem anderen Ende 12 an bzw. fällt von der betragsmäßigen maximalen Krümmung $|K_{max}|$ am einen Ende $11_3$ in Richtung zum anderen Ende 12 auf die Krümmung null an diesem anderen Ende 12 ab. Man könnte auch sagen, daß die Krümmung von der Krümmung null am Ende 12 dieses Abschnitts $10_4$ in Richtung zum anderen Ende $11_3$ dieses Abschnitts $10_4$ stetig monoton auf die betragsmäßig maximale Krümmung $|K_{max}|$ an dem anderen Ende $11_3$ ansteigt bzw. auf die minimale negative Krümmung $-K_{max}$ an diesem Ende $11_3$ abfällt. Wie schon angedeutet, sind alle diese Aussagen gleichwertig.

Der Verlauf der Krümmung in Abhängigkeit von der beispielsweise von einem Ende 11 des Wellenleiters 1 aus gemessenen Bogenlänge s der Längsachse 10 ist vorzugsweise eine nichtlineare Funktion K(s) dieser Bogenlänge s, vorzugsweise zumindest näherungsweise die Funktion:

$$K(s) = C_1 \cdot \sinh(C_2 \cdot s),$$

wobei $C_1$ und $C_2$ jeweils vorgebbare Konstanten sind, die durch die Wellenleitergeometrie bestimmt sind.

In Figur 1 ist im unteren Teil in einem Kurvenschaubild beispielhaft der Verlauf der Krümmung K(s) als Funktion der Bogenlänge s dargestellt, wobei beispielsweise dem einen Ende 11 des Wellenleiters 1 die Bogenlänge s = 0 und dem anderen Ende 12 die bogenmäßige Gesamtlänge L der gekrümmten Längsachse 10 zwischen diesen Enden 11 und 12 zugeordnet ist.

Beispielsweise sind die Bogenlängen der Abschnitte $10_1$, $10_2$, $10_3$ und $10_4$ zwischen ihren Enden 11 und $11_1$, $11_1$ und $11_2$, $11_2$ und $11_3$ bzw. $11_3$ und 12 gleich groß gewählt, so daß jeder dieser Abschnitte $10_1$ bis $10_4$ die Bogenlänge L/4 aufweist, was bevorzugt, aber nicht notwendig ist.

Der obere Teil der Figur 1 zeigt den tatsächlichen, S-förmigen örtlichen Verlauf der entsprechend der Funktion K(s) gekrümmten Längsachse 10 und damit des gekrümmten Wellenleiters 1 selbst als Funktion f(x) der Ortskoordinate x, die auf der zu den Tangenten der Längsachse 10 in den Enden 11 und 12 des Wellenleiters 1 parallelen Abszisse aufgetragen ist. Der parallel zur Abszisse gemessene Abstand zwischen den Enden 11 und 12 des Wellenleiters 1 ist mit $X_0$ und der senkrecht zur Abszisse und parallel zur Ordinate gemessene Abstand zwischen diesen Enden 11 und 12 ist mit V bezeichnet.

Bei dem Wellenleiter nach Figur 1 betragen bei einer Breite von 4 $\mu$m der Rippe, einem effektiven Brechzahlsprung von $3 \times 10^{-2}$ und einer Wellenlänge $\lambda$ = 1,55 $\mu$m die errechneten Konversionsverluste 0,03 dB für einen Wellenleiter 1 mit $X_0$ = 2 mm und mit V = 680 $\mu$m.

Die Figur 2 zeigt ein Beispiel eines Wellenleiters 1 mit gekrümmter Längsachse 10, das der linken Hälfte des Wellenleiters 1 nach Figur 1 mit den Abschnitten $10_1$ und $10_2$ entspricht. In der Figur 2 haben diese Abschnitte $10_1$ und $10_2$ die gleiche Länge L/2, d.h. die Hälfte der bogenlängenmäßigen Gesamtlänge L der Längsachse 10 zwischen den Enden 11 und 12 des Wellenleiters 1. Auch die im Kurvenschaubild der Figur 2 dargestellte Funktion K(s) entspricht der linken Hälfte der Funktion K(s) in Figur 1. Danach hat auch bei diesem Wellenleiter 1 nach Figur 2 die Längsachse 10 an den Enden 11 und 12 des Wellenleiters 1 die Krümmung null. Im Unterschied zur Längsachse 10 nach Figur 1 weist die Längsachse 10 nach Figur 2 am anderen Ende 12 des Wellenleiters 1 eine im Winkel zur Abszisse der Ortskoordinate x stehende Tangente auf. Mit dem Wellenleiter 1 nach Figur 2 können zwei um den Winkel $\alpha$ zueinander verdrehte Bauelemente optisch miteinander verbunden werden.

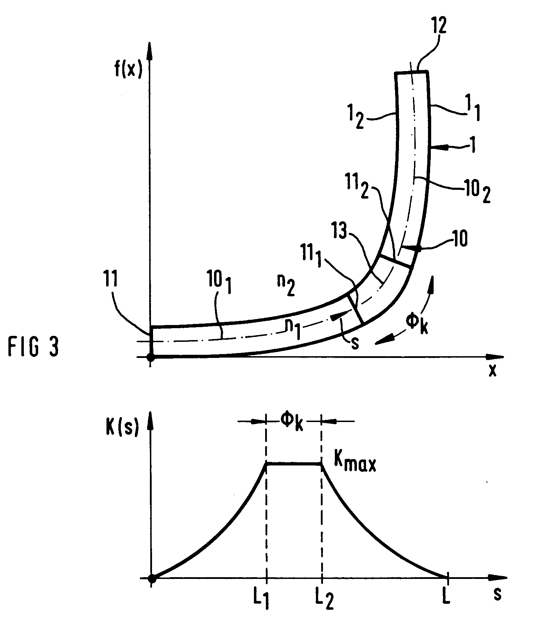

Das Beispiel nach Figur 3 unterscheidet sich vom Beispiel nach Figur 2 lediglich dadurch, daß die beiden Abschnitte $10_1$ und $10_2$ der Längsachse 10 nicht unmittelbar aneinandergrenzen, sondern daß die Längsachse 10 einen zwischen diesen beiden Abschnitten $10_1$ und $10_2$ eingefügten Zwischenabschnitt 13der konstanten positiven maximalen Krümmung $K_{max}$ und der Bogenlänge $L_2-L_1$ aufweist, die einem Bogenwinkel $\phi_k$ entspricht. Die beiden Abschnitte $10_1$ und $10_2$ der Bogenlänge $L_1$ und $L-L_2$ grenzen unmittelbar an den Zwischenabschnitt 13 an. L bedeutet wieder die bogenlängenmäßige Gesamtlänge der Längsachse 10 zwischen den Enden 11 und 12 des Wellenleiters 1.

Das Einfügen des Wellenleiterstücks mit dem Zwischenabschnitt 13 der Längsachse 10 ruft keine zusätzlichen Konversionsverluste hervor, falls:

1) der transversale Wellenleiterquerschnitt entlang des Zwischenabschnitts unverändert bleibt,

2) das Einfügen solcher Wellenleiterstücke ohne lateralen Versatz bezuglich der Längsachse 10 geschieht, und

3) die Krümmung K(s) als Funktion der Bogenlänge s längs der Längsachse 10 eine stetige Funktion ist.

Zum besseren Verständnis der Funktion des erfindungsgemäßen Wellenleiters erfolgt folgende Funktionsbeschreibung:

Die transversale Geometrie des Wellenleiters 1 wird so gewählt, daß der Wellenleiter in einem Abschnitt $10_1$, $10_2$, $10_3$ bzw. $10_4$ zwei Moden führt. Die betragsmäßig maximale Krümmung $|K_{max}|$ an einem Ende $11_1$, $11_3$ jedes dieser Abschnitte $10_1$, $10_2$, $10_3$ bzw. $10_4$ ist dabei so zu wählen, daß die Strahlungsdämpfung für beide Moden und Polarisationsrichtungen vernachlässigbar klein ist.

Die Krümmung K(s) als Funktion der Bogenlänge s der Längsachse 10 wird durch die Bedingung bestimmt, daß der normalerweise von der Bogenlänge s abhängige Koppelkoeffizient $x(s)$ zwischen den zwei Moden des Wellenleiters 1 entlang der Längsachse 10 konstant ist (siehe Sporleder F., Unger H.-G. "Waveguide tapers and transitions and couplers", IEE Electromagnetic wave series 6, (Peter Peregrinus LTD, 1979)):

$$x(s) \; = \; \text{konst.}$$

Durch die Festlegung der Koppelkonstanten in $x(s)$ = konst. pendelt der konstante Anteil p = $x^2/(x^2+\Delta\beta^2)$ der Lichtleistung zwischen den zwei lokalen Moden des Wellenleiters 1 (siehe Sporleder F., Unger H.-G. "Waveguide tapers and transitions and couplers", IEE Electromagnetic wave series 6, (Peter Peregrinus LTD, 1979)). Dabei beschreibt $\Delta\beta$ die Differenz der Phasenkonstanten der Moden, welche für konstante Breite des Wellenleiters 1 näherungsweise unabhängig von der Krümmung K-(s) als Funktion der Bogenlänge s ist. Nach einem ganzzahligen Vielfachen der Gesamtlänge L der Längsachse 10 zwischen den Enden 11 und 12 des Wellenleiters 1, welche durch

$$L^2 \; = \; \pi^2/(x^2+\Delta\beta^2)$$

errechnet wird, befindet sich die gesamte geführte Leistung wieder im Grundmodus, falls dieser an einem Ende 11 oder 12 des Wellenleiters angeregt wurde.

Es soll vermieden werden, daß zum Aufbau des gekrümmten Wellenleiters 1 eine bestimmte Gesamtlänge der Längsachse 10 zwischen den Enden 11 und 12 eingehalten werden muß, so kann durch Verkleinern der Koppelkonstanten in $x(s)$ = konst. der Leistungsanteil p so klein gewählt werden, daß der Wellenleiter nach beliebiger Länge abgebrochen werden kann. In diesem Fall geht maximal der polarierte Anteil p der Lichtleistung verloren. Für $p \ll 1$ geht der Wellenleiter 1 in einen adiabatischen Koppler über (siehe Sporleder F., Unger H.-G. "Waveguide tapers and transitions and couplers", IEE Electromagnetic wave series 6, (Peter Peregrinus LTD, 1979)).

Der allgemeine Verlauf der Krümmung K(s) als Funktion der Bogenlänge S ist durch $x(s)$ = konst. bestimmt und kann numerisch unter der Voraussetzung, daß an beiden Enden 11 und 12 des Wellenleiters 1 die Krümmung null ist, berechnet werden. Aus dem Verlauf der Krümmung K(s) als Funktion der Bogenlänge s läßt sich der örtliche Verlauf der Längsachse 10 des Wellenleiters 1 bestimmen.

Der erfindungsgemäße Wellenleiter kann in allen Materialsystemen, die in der integrierten Optik von Bedeutung sind, realisiert werden.

**Patentansprüche**

**1.** Streifenförmiger integriert optischer Wellenleiter (1) mit zwischen den Enden (11, 12) des Wellenleiters (1) gekrümmt verlaufender Längsachse (10) zur Herstellung optischer Verbindungen, insbesondere zwischen Komponenten eines optischen Schaltkreises,

**dadurch gekennzeichnet,**

- daß die Längsachse (10) an beiden Enden (11, 12) des Wellenleiters (1) die Krümmung null aufweist, und
- daß die Längsachse (10) zwischen den beiden Enden (11, 12) des Wellenleiters (1) zumindest zwei Abschnitte ($10_1$, $10_2$, $10_3$, $10_4$) aufweist, in welchen jeweils die Krümmung der Längsachse (10) von einem Ende (11, $11_2$, 12; 11, 12) des Abschnitts ($10_1$, $10_2$, $10_3$, $10_4$) in Richtung zu einem anderen Ende ($11_1$, $11_3$; $11_1$; $11_1$, $11_2$) des Abschnitts ($10_1$, $10_2$, $10_3$, $10_4$) stetig monoton von der Krümmung null am einen Ende ($10_1$, $10_2$, $10_3$, $10_4$) auf eine betragsmäßig maximale Krümmung ($|K_{max}|$) am anderen Ende ($11_1$, $11_3$; $11_1$; $11_1$, $11_2$) des Abschnitts ($10_1$, $10_2$, $10_3$, $10_4$) zunimmt.

**2.** Wellenleiter nach Anspruch 1,

**dadurch gekennzeichnet,**

daß in einem Abschnitt ($10_1$, $10_2$, $10_3$, $10_4$) der Längsachse (10) die Krümmung der Längsachse (10) eine Funktion (K(s)) einer Bogenlänge (s) der Längsachse (10) ist, die durch die Bedingung bestimmt ist, daß ein normalerweise von der Bogenlänge (s) abhängiger Koppelkoeffizient ($x$(s)) zu zwei im Wellenleiter (1) geführten Moden in diesem Abschnitt ($10_1$, $10_2$, $10_3$, $10_4$) zumindest näherungsweise konstant ist.

**3.** Wellenleiter nach Anspruch 2,

**dadurch gekennzeichnet,**

daß in dem Abschnitt ($10_1$, $10_2$, $10_3$, $10_4$) die Krümmung nichtlinear von der Bogenlänge (s) abhängt.

**4.** Wellenleiter nach Anspruch 2,

**dadurch gekennzeichnet,**

daß die Krümmung (K(s)) zumindest näherungsweise entsprechend der Funktion

$$K(s) = C_1 \cdot \sinh(C_2 \cdot s)$$

von der Bogenlänge (s) abhängt, wobei $C_1$ und $C_2$ jeweils vorgebbare Konstanten sind.

**5.** Wellenleiter nach einem der vorhergehenden Ansprüche,

**dadurch gekennzeichnet,**

daß der Querschnitt des Wellenleiters (1) entlang der Längsachse (10) konstant ist.

**6.** Wellenleiter nach einem der vorhergehenden Ansprüche,

**dadurch gekennzeichnet,**

daß optisch brechende Begrenzungsflächen ($1_1$, $1_2$), deren jede einen Brechzahlsprung zwischen einer Brechzahl ($n_1$) des Wellenleiters (1) und einer Brechzahl ($n_2$) eines den Wellenleiter umgebenden Mediums definiert, den Wellenleiter (1) seitlich begrenzen.

**7.** Wellenleiter nach einem der vorhergehenden Ansprüche,

**gekennzeichnet dadurch**

zumindest zwei aneinandergrenzende Abschnitte ($10_1$, $10_2$, $10_3$, $10_4$), in welchen jeweils die Krümmung (K) der Längsachse (10) von einem Ende (11, $11_2$, 12) dieses Abschnitts ($10_1$, $10_2$, $10_3$, $10_4$) in Richtung zum anderen Ende ($11_1$, $11_3$) dieses Abschnitts ($10_1$, $10_2$, $10_3$, $10_4$) stetig monoton von der Krümmung null am einen Ende (11, $11_2$, 12) auf eine betragsmäßige maximale Krümmung ($K_{max}$) am anderen Ende ($11_1$, $11_3$) dieses Abschnitts ($10_1$, $10_2$, $10_3$, $10_4$) zunimmt.

**8.** Wellenleiter nach Anspruch 7,

**gekennzeichnet durch**

zumindest zwei aneinandergrenzende Abschnitte (-($10_1$, $10_2$, $10_3$, $10_4$), die an ihren aneinandergrenzenden Enden ($11_1$, $11_3$) eine sowohl betragsmäßig als auch vorzeichenmäßig gleiche Krümmung ($K_{max}$) der Längsachse (10) aufweisen.

**10.** Wellenleiter nach Anspruch 7 oder 8,

**dadurch gekennzeichnet,**

daß die zwei oder mehreren Abschnitte ($10_1$, $10_2$, $10_3$, $10_4$) zwischen ihren Enden (11, $11_1$; $11_1$, $11_2$; $11_2$, $11_3$; $11_3$, 12) gleiche Bogenlänge (L/4) aufweisen.

**11.** Wellenleiter nach einem der Ansprüche 7 bis 9,

**dadurch gekennzeichnet,**

daß zwischen zwei Abschnitten ($10_1$, $10_2$) ein Zwischenabschnitt (13) mit konstanter Krümmung ($K_0$) der Längsachse (10) vorgesehen ist, der an diese beiden Abschnitte ($10_1$, $10_2$) angrenzt.

FIG 1

FIG 2

FIG 3